# FASCICULE DE BREVET EUROPEEN

(11) **EP 0 886 042 B1**
(45) Date de publication et mention de la délivrance du brevet: **13.08.2003**
(21) Numéro de dépôt: 98401138.7
(22) Date de dépôt: 12.05.1998
(51) Int. Cl.: F01N 3/08

(54) **Procédé et ensemble d'élimination des oxydes d'azote presents dans des gaz d'échappement**
Verfahren und Vorrichtung zur Entfernung von Stickoxiden in den Abgasen
Process and assembly for removing nitrogen oxides which are present in exhaust gases

(30) Priorité: 16.06.1997 FR 9707554
(43) Date de publication de la demande: 23.12.1998
(73) Titulaire: Institut Francais du Petrole, 92852 Rueil-Malmaison Cedex (FR)
(72) Inventeur: Martin, Brigitte, 69230 Saint Genis Laval (FR); Bouchez, Matthias, 92190 Meudon (FR)

(56) Documents cités:
- EP-A- 0 540 280
- EP-A- 0 754 841
- DE-A- 19 626 836
- DE-C- 4 319 294

## Description

La présente invention concerne le domaine du traitement des gaz émis à l'échappement des moteurs diesel et des moteurs à allumage commandé fonctionnant en mélange pauvre.

De tels moteurs émettent un certain nombre de polluants qu'il est nécessaire d'éliminer et ce d'autant plus efficacement que les normes se sévèrisent en la matière.

Parmi les polluants les plus nombreux et les plus gênants pour l'environnement, on peut citer les oxydes d'azotes.

Il est connu d'éliminer ce type de polluants en faisant passer les gaz d'échappement à travers des catalyseurs (dits *DéNO*_{*x*}) destinés à convertir les oxydes d'azote. Les catalyseurs connus étant actifs sur une plage de température donnée, on peut être amené à disposer, dans le pot catalytique, plusieurs catalyseurs ayant des formulations différentes c'est-à-dire des plages d'activité différentes. On agrandit ainsi le domaine d'action des éléments catalytiques. Cependant, dans ce contexte, un problème se pose lorsque les gaz d'échappement ne sont pas, au niveau du ou des catalyseurs, dans une plage de température pour laquelle la conversion des oxydes d'azote est suffisante.

Plus précisément, un problème se pose lorsque l'on dispose par exemple d'un premier catalyseur actif sur une première plage de température et d'un deuxième catalyseur actif sur une deuxième plage de température, et que ces plages sont telles qu'il existe une gamme de températures située entre et au delà des deux plages prédéfinies, plage pour laquelle la conversion des oxydes d'azote sera faible.

Par ailleurs, aux plus basses température, c'est-à-dire avant que les gaz n'atteignent une température où ils sont susceptibles d'être convertis par l'un des catalyseurs, il y a aussi absence de conversion des oxydes d'azote.

A titre illustratif les formulations utilisées pour les basses températures sont de type Platine/Alumine ou Platine/Zeolithe. Les températures pour lesquelles ces catalyseurs sont les plus actifs sont de 200°C à 250°C.

Les catalyseurs dits "Hautes températures" sont actifs en général entre 300°C et 500°C. Ce sont par exemple des catalyseurs de type Cuivre/Zéolithe.

Il est bien évident qu'entre ces deux plages, c'est-à-dire ici entre 250°C et 300°C aucune conversion des oxydes d'azote ne peut efficacement être réalisée. Au-dessous de 200°C et au delà de 500°C, le même problème existe.

Il existe par ailleurs des catalyseurs sur lesquels les oxydes d'azote viennent s'adsorber sous forme de nitrates lorsque la température des gaz qui les traverse, est située dans une certaine plage. Ces catalyseurs sont couramment appelés "pièges à NOₓ". Les nitrates ainsi adsorbés peuvent ensuite être déstockés soit thermiquement soit par une combustion momentanée à une richesse supérieure à l'unité. Cette dernière action est bien adaptée pour les lignes d'échappement de moteurs à allumage commandé fonctionnant en mélange pauvre.

La demande de brevet EP-Al-0540280 décrit un système comprenant un piège à NOx, muni d'un système de réchauffage des gaz, suivi d'un catalyseur de réduction des oxydes d'azote. Les deux catalyseurs sont montés en dérivation de la ligne d'échappement principale. Selon ce document, un système de vanne permet de diminuer, lors des phases de déstockage du piège, la VVH (rapport entre le débit de gaz et le volume du catalyseur qui traduit le temps de contact des gaz avec le catalyseur). Ainsi le taux de conversion des NOx sur le catalyseur de réduction des oxydes d'azote est amélioré. Néanmoins, avec cette configuration, la partie du flux gazeux passant par le conduit principal ne traverse pas le catalyseur de réduction des NOx. De plus, il peut exister des plages de température où le piège à NOx et le catalyseur de réduction des NOx sont actifs, auquel cas, on stockera les NOx sur le piège alors qu'on aurait pu les réduire. Selon cet art antérieur, la régulation du débit n'est pas destinée à optimiser la quantité de gaz à réchauffer pour le déstockage thermique des NOx préalablement stockés, mais est plutôt destinée à améliorer la conversion des oxydes d'azote sur le catalyseur de réduction des oxydes d'azote.

Il est également connu par le document EP-A-754841 un dispositif d'épuration de gaz d'échappement d'un moteur comprenant deux catalyseurs de conversion de polluants disposés dans la ligne d'échappement et qui présentent des plages de température non jointives pour lesquelles la conversion est inférieure à un certain taux de conversion, un adsorbeur placé en amont des catalyseurs et destiné à piéger puis à libérer les polluants tout en étant disposé sur une ligne placée en dérivation de la ligne d'échappement et une multiplicité de vannes disposées sur la ligne en dérivation et sur la ligne d'échappement.

Ainsi au démarrage du moteur, l'adsorbeur piégent les polluants des gaz d'échappement par fermeture d'une vanne de la ligne d'échappement et ouverture de vannes de la ligne en dérivation jusqu'à ce que le premier catalyseur, qui possède la plage la plus basse, ait atteint sa température de fonctionnement. Une fois cette température atteinte, la ligne en dérivation est fermée et la ligne d'échappement est ouverte pour que les gaz d'échappement traverse les deux catalyseurs. Dés que l'autre catalyseur, qui a une plage de températures supérieure au premier catalyseur, a atteint sa température de fonctionnement, la ligne d'échappement est à nouveau fermée et la ligne en dérivation est ouverte de façon à ce que l'adsorbeur puisse être désorbé par chauffage grâce aux gaz d'échappement. Après l'opération de désorption, la ligne en dérivation est fermée et la ligne d'échappement est ouverte et les gaz d'échappement traverse les catalyseurs.

Avec ce dispositif, d'une part, il existe également des plages de températures où il n'y a pas de conversion et, d'autre part, le déstockage de l'adsorbeur aura lieu systématiquement alors qu'il peut ne pas s'avérer nécessaire.

Le problème évoqué ci-avant concernant la mauvaise conversion dans certaines plages, ainsi que d'autres, peuvent être résolus selon l'invention.

Ainsi la présente invention a pour objet un ensemble d'élimination des oxydes d'azote (NOₓ) présents dans des gaz d'échappement issus d'un moteur diesel ou à allumage commandé fonctionnant en mélange pauvre, ledit ensemble faisant partie de la ligne d'échappement sortant du moteur et comprenant :
- une pluralité de catalyseurs de conversion des oxydes d'azote disposés dans la ligne principale d'échappement, lesdits catalyseurs présentant des plages de température de conversion non jointives pour lesquelles la conversion des NOx est supérieure à un certain taux de conversion,
- au moins un moyen placé en amont des catalyseurs de conversion et destiné à piéger puis à libérer les oxydes d'azote
- au moins une ligne placée en dérivation de la ligne principale d'échappement, à l'intérieur de laquelle est disposé au moins un desdits moyens de piégeage des NOₓ,
- au moins une vanne destinée à moduler le débit de gaz entre ladite ligne de dérivation et la ligne principale d'échappement.

Conformément à l'invention, l'ensemble comprend en outre - un moyen tel qu'un calculateur destiné à contrôler au moins ladite vanne afin que le moyen de piégeage puisse piéger lesdits oxydes d'azote notamment lorsque le ou les catalyseurs de conversion présentent un taux de conversion inférieur à ladite valeur prédéterminée et de telle sorte que ledit moyen de piégeage des NOₓ puisse déstocker lesdits oxydes d'azote simultanément à une conversion.

Par ailleurs, l'ensemble selon l'invention comprend en outre un moyen de chauffage associé à au moins un moyen de piégeage des NOₓ.

Avantageusement, l'ensemble comprend en outre au moins un premier capteur de température disposé en amont des catalyseurs, ledit premier capteur étant relié audit moyen de contrôle auquel il transmet des valeurs de température.

En outre l'ensemble comprend au moins un deuxième capteur de température disposé en amont du moyen de piégeage des oxydes d'azote, ledit capteur étant relié audit moyen de contrôle auquel il envoie des valeurs de température.

Sans sortir du cadre de l'invention, ledit calculateur est en outre relié audit moyen de chauffage afin de l'actionner en fonction notamment des valeurs de température qu'il reçoit.

L'état de saturation du piège à NOₓ peut parallèlement être pris en compte par le calculateur.

De façon particulière, ledit calculateur réagit en fonction des températures qu'il reçoit et en fonction de valeurs prédéterminées mémorisées, et actionne en conséquence la vanne de répartition du débit.

L'ensemble selon l'invention peut par ailleurs comprendre un moyen destiné à injecter des hydrocarbures dans la ligne d'échappement, en amont des catalyseurs de conversion, commandé par ledit calculateur.

L'invention a aussi pour objet un procédé d'élimination des oxydes d'azote présents dans les gaz d'échappement issus d'un moteur à combustion interne Diesel ou à allumage commandé fonctionnant en mélange pauvre, consistant à :
- convertir les oxydes d'azote sur au moins deux plages de température de conversion non jointives, pour lesquelles la conversion est supérieure à un certain taux de conversion, grâce à plusieurs catalyseurs de conversion,
- adsorber lesdits oxydes d'azote sur au moins un moyen de piégeage spécifique avec une température d'adsorption inférieure à la température minimale de la première plage de température de conversion.

Conformément au procédé selon l'invention, l'adsorption des oxydes d'azote est réalisée pour au moins une plage de température des gaz d'échappement dans laquelle le taux de conversion catalytique est inférieur à ladite valeur prédéterminée (Cₘᵢₙ) et la désorption des oxydes d'azote peut être réalisée simultanément à la conversion desdits oxydes.

Selon un mode de réalisation de l'invention on désorbe les oxydes d'azote (NOₓ) adsorbés en les chauffant et/ou en faisant passer les gaz d'échappement à travers ledit moyen de piégeage spécifique.

Selon une autre mise en oeuvre de l'invention, l'on désorbe les NOₓ adsorbés en les chauffant par un moyen spécifique de chauffage associé audit moyen de piégeage des oxydes d'azote. L'ouverture de la vanne définit alors la quantité optimale du flux gazeux à réchauffer ce qui permet, notamment, de limiter l'énergie dépensée par le moyen de chauffage.

Le procédé selon l'invention prévoit additionnellement l'adsorbtion/désorbtion réalisée dans un conduit en dérivation de la ligne d'échappement principale et la modulation du débit entre le conduit de dérivation et la ligne principale, en fonction d'au moins un paramètre lié à la température des gaz dans la ligne d'échappement et/ou à l'état de saturation du piège à NOₓ.

On mesure, selon l'invention, la température des gaz en au moins un point de la ligne d'échappement.

Préférentiellement, on mesure la température en amont de la conversion catalytique.

Additionellement, la température en amont de l'adsorption des oxydes d'azote peut être mesurée.

De préférence, on utilise un calculateur, qui reçoit des températures mesurées en au moins un point de la ligne d'échappement.

Particulièrement, ledit calculateur reçoit des températures mesurées en amont de la conversion catalytique et de l'adsorption des oxydes d'azote, et ledit calculateur commande en conséquence un élément de modulation du flux entre ligne d'échappement principale et conduit de dérivation.

Avantageusement, ledit calculateur commande le moyen de chauffage des gaz d'échappement associé au moyen de piégeage des oxydes d'azote. En outre, on injecte des hydrocarbures lorsque le ratio HC/NOₓ contenu dans les gaz d'échappement en amont du ou des catalyseurs DéNOx n'est pas compris dans une plage prédéterminée.

D'autres caractéristiques, détails, avantages de l'invention apparaîtront mieux à la lecture de la description qui va suivre, faite à titre illustratif et nullement limitatif, en référence aux figures annexées sur lesquelles :
- La figure 1 est un schéma reprenant les principaux éléments de l'invention; et
- la figure 2 montre des courbes donnant le taux de conversion des catalyseurs DéNO_{*x*} en fonction de la température des gaz d'échappement.

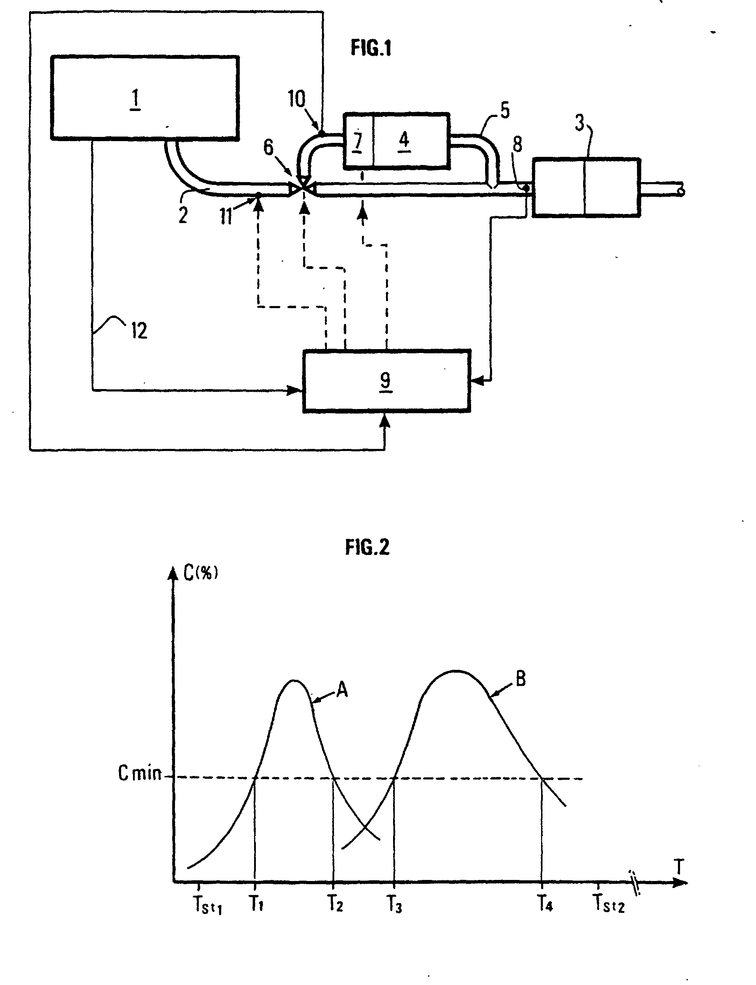

La figure 1 illustre les principaux éléments structurels formant l'ensemble d'élimination des oxydes d'azote selon l'invention.

Un moteur 1 est schématisé avec sa ligne principale d'échappement 2, dans laquelle est mise en oeuvre l'invention.

L'invention concerne, par exemple, les moteurs de type Diesel ou à allumage commandé fonctionnant en mélange pauvre, pour lesquels la réduction des NOx est difficile.

De façon connue, un ou plusieurs catalyseurs DéNOₓ 3 sont placés sur la ligne d'échappement 2. Selon sa formulation, chaque catalyseur agit pour une plage de température spécifique des gaz d'échappement.

Par ailleurs, un moyen 4 de piégeage des oxydes d'azote peut être ajouté dans la ligne d'échappement 2.

Selon l'invention, il est prévu au moins une ligne 5 placée en dérivation de la ligne principale d'échappement 2, à l'intérieur de la ligne 5 est disposé au moins un moyen 4 de piégeage des oxydes d'azote (adsorbeur de NOₓ).

La dérivation 5 débouche dans la conduite principale 2 juste en amont des catalyseurs DéNOₓ 3.

En outre, un moyen de vannage 6 est prévu, placé à l'intersection de la ligne principale 2 et de la dérivation 5, côté amont. La vanne 6 est destinée à moduler le débit de gaz entre la ligne principale 2 qui aboutit sur le ou les convertisseurs catalytiques 3 et la dérivation (ou by-pass) 5 équipée du moyen 4 de piégeage des NOₓ.

Ainsi, le moyen 4 peut par exemple piéger les oxydes d'azote lorsque les catalyseurs de conversion ne sont pas suffisamment actifs, en dessous d'un certain seuil de conversion Cₘᵢₙ, comme il va être expliqué plus en détail ci-après.

Addititionnellement, un moyen de chauffage 7 peut être prévu, associé au moyen 4 de piégeage des oxydes d'azote.

En outre, au moins un premier capteur de température 8 peut être monté sur la ligne d'échappement principale 2.

Préférentiellement, ledit capteur 8 est placé juste en amont du (ou des) catalyseur(s) de conversion 3, à proximité de la sortie de la dérivation 5.

Le capteur 8 est relié à un moyen de contrôle et/ou de calcul tel qu'un microprocesseur 9.

Le moyen de calcul 9 peut par ailleurs recevoir la température des gaz d'échappement à l'entrée du moyen 4 de piégeage des NOₓ, grâce à un deuxième capteur de température 10 placé à cet endroit de la dérivation 5.

Grâce aux informations qu'il reçoit, ainsi qu'à des valeurs mémorisées, le calculateur 9 réagit sur plusieurs éléments ; les lignes fléchées en traits pleins sur la figure 1 symbolisent les informations reçues par le calculateur 9. Il faut ainsi remarquer que ledit calculateur 9 utilise des informations mesurées ou calculées (régime, températures, cartographie des polluants, état de saturation du piège à NOₓ) relatives au fonctionnement du moteur, et représentées globalement par la ligne 12 de la figure 1.

Les lignes en pointillé sur la figure 1 représentent les actions de commande du calculateur 9 sur certains éléments : ainsi le calculateur 9 agit sur la vanne 6 de réglage du débit entre ligne principale 2 et dérivation 5.

Par ailleurs, en fonction des informations qu'il reçoit, le calculateur peut déclencher le moyen de chauffage 7;

Sans sortir du cadre de la présente invention, le calculateur peut commander un moyen 11 destiné à injecter une certaine quantité d'hydrocarbures dans la ligne principale 2.

En relation avec la figure 2, le fonctionnement de l'ensemble qui vient d'être décrit va maintenant être expliqué.

Sur le graphe de la figure 2 le taux de conversion (C) des NOₓ par le ou les catalyseurs tels que 3 est donné en fonction de la température (T) des gaz prise juste en amont desdits catalyseurs 3.

Selon cet exemple, deux catalyseurs de formulation différente sont utilisés : l'un donne la courbe A c'est-à-dire qu'il est suffisamment actif entre T₁ et T₂. C'est un catalyseur dont la formulation lui permet de réagir aux basses températures.

Le deuxième catalyseur réagit selon la courbe B, c'est-à-dire pour des gaz dont les températures sont comprises entre T₃ et T₄, T₃ étant supérieur à T₂.

Les valeurs T₁, T₂, T₃ et T₄ correspondent à un taux de conversion prédéterminé Cₘᵢₙ, minimum acceptable.

Sur le graphe de la figure 2, Tₛₜ₁ et Tₛₜ₂ désignent respectivement les bornes de la plage de température sur laquelle le piège à NOₓ est susceptible d'adsorber les oxydes d'azote. T_{dest} désigne la température à partir de laquelle les NOₓ peuvent être désorbés thermiquement.

Pour des taux de conversion inférieurs à un seuil donné, tel que Cₘᵢₙ sur la figure 2, un problème se pose habituellement. La présente invention permet de le résoudre.

### Phase de stockage des NOₓ

Lorsque la température des gaz d'échappement se situe dans une plage où le taux de conversion du catalyseur DéNOₓ est inférieure au seuil Cₘᵢₙ et où l'adsorbeur de NOx 4 est actif, tous les gaz d'échappement sont déviés sur le conduit 5 contenant l'adsorbeur de NOₓ 4 : ceci se produit, selon la figure 2 entre Tₛₜ₁ et T_{1 ;} entre T₂ et T₃ et entre T₄ et Tₛₜ₂.

En fonction de certains paramètres comme le débit de gaz traversant le piège 4, la teneur en NOₓ de ces gaz, l'efficacité d'adsorption du piège, on peut estimer la quantité de NOₓ adsorbée sur le piège 4 et déterminer s'il est saturé. Il serait également possible, par le biais d'une sonde à NOₓ de déterminer directement si le piège est saturé.

### Phase de destockage des NOₓ

La désorption des NOₓ piégés sur l'adsorbeur de NOₓ 4 se fait thermiquement. L'énergie thermique nécessaire à cette désorption est apportée soit par les gaz d'échappement eux-mêmes soit, si l'énergie thermique des gaz d'échappement n'est pas suffisante, par un système de chauffage supplémentaire tel que le moyen 7.

Lorsque l'on décide de déstocker les NOₓ accumulés sur le piège 4 parce que celui-ci est saturé ou parce que les conditions de déstockage sont optimales et que les gaz d'échappement traversant le catalyseur DéNOₓ 3 sont à une température qui assure un taux de conversion des NOₓ suffisant, un partie ou la totalité du débit des gaz d'échappement passe par le by-pass. Si la température des gaz d'échappement au niveau du piège à NOₓ 4 n'est pas suffisante pour assurer le déstockage des NOₓ, le moyen de chauffage 7 permet alors d'atteindre un niveau de température suffisant pour le déstockage. La vanne 6 régule alors le débit passant par le by-pass 5 afin qu'une partie seulement des gaz soit réchauffée. Elle permet ainsi de limiter l'énergie nécessaire au moyen de chauffage 7, tout en assurant un déstockage des NOx piégés dans le moyen 4.

### Phase de réduction des NOₓ

La réduction des NOₓ sur le catalyseur DéNOₓ 3 dépend de certains paramètres comme la température, la VVH (rapport entre le débit volumique de gaz traversant le catalyseur et le volume de ce catalyseur), le rapport HC/NOₓ. Si la quantité des hydrocarbures (HC) imbrûlés issus de la combustion du moteur n'est pas suffisante, une injection supplémentaire d'hydrocarbures peut être réalisée de telle sorte que l'on se trouve dans les conditions optimales de réduction des NOₓ.

Dans un moteur à combustion interne, plusieurs zones d'injection peuvent être envisagées :
- en amont de la soupape d'admission de telle sorte que la totalité ou une partie de ces hydrocarbures injectés se retrouve à l'échappement sous forme d'hydrocarbures imbrûlés.
- Dans la chambre de combustion, avant ou après l'injection principale, de telle sorte que la totalité ou une partie de ces hydrocarbures se retrouve sous forme d'hydrocarbures imbrûlés à l'échappement.
- Dans la ligne d'échappement en amont du catalyseur DéNOₓ 3.

Lors des phases de réduction des NOₓ sur le catalyseur DéNOₓ 3 la totalité ou une partie des gaz passe dans la conduite principale 2 avant de traverser le catalyseur DéNOₓ 3.

La phase de réduction des NOₓ est un traitement complémentaire, nécessaire à l'élimination des NOₓ issus directement du moteur et/ou issus du piège à NOₓ 4.

Une gestion simplifiée du système décrit ci-dessus va maintenant être exposée.

Le calculateur 9 détermine en fonction de valeurs mesurées ou calculées si le taux de conversion C du catalyseur DéNOₓ 3 est supérieur ou non à Cmin.

Si le taux de conversion est supérieur à Cₘᵢₙ, le rapport HC/NOₓ est ajusté (si nécessaire), via une injection supplémentaire d'hydrocarbures, afin d'optimiser le taux de conversion C des oxydes d'azote. Simultanément, en fonction notamment de l'état de saturation du piège, on décide ou non de déstocker les NOₓ qui ont été, au préalable, stockés sur le piège à NOₓ4.

Dans le cadre d'un déstockage, le calculateur 9 gère l'ouverture de la vanne 6 ainsi que le moyen de réchauffage 7 afin d'obtenir une température T10 en amont du piège, supérieure à Tdest ainsi qu'une température de mélange T8 située dans la plage d'activité du ou des catalyseurs DéNOx.

Si le taux de conversion C est inférieur au taux Cmin et que la température (estimée ou mesurée) des gaz au niveau du piège à NOx est comprise entre Tₛₜ₁ et Tₛₜ₂, tout le débit des gaz d'échappement passe dans la dérivation 5, sur le piège à NOₓ. De manière différente si cette température est supérieure à Tₛₜ₂ et que le taux de conversion C est inférieur à Cₘᵢₙ, tout le débit des gaz d'échappement passe par la conduite principale 2.

## Revendications

1. Ensemble d'élimination des oxydes d'azote (NOₓ) présents dans des gaz d'échappement issus d'un moteur diesel ou à allumage commandé fonctionnant en mélange pauvre, ledit ensemble faisant partie de la ligne d'échappement sortant du moteur et comprenant :
- une pluralité de catalyseurs (3) de conversion des oxydes d'azote disposés dans la ligne principale d'échappement (2), lesdits catalyseurs présentant des plages de température de conversion (T1, T2 ; T3, T4) non jointives pour lesquelles la conversion des NOₓ est supérieur à un certain taux de conversion (Cₘᵢₙ),
- au moins un moyen (4) placé en amont des catalyseurs de conversion (3) et destiné à piéger puis à libérer les oxydes d'azote,
- au moins une ligne (5) placée en dérivation de la ligne principale d'échappement (2), à l'intérieur de laquelle est disposé au moins un desdits moyen de piégeage des NOₓ (4),
- au moins une vanne (6) destinée à moduler le débit de gaz entre ladite ligne de dérivation (5) et la ligne principale d'échappement (2),
**caractérisé en ce qu'**il comprend en outre
- un moyen tel qu'un calculateur (9) destiné à contrôler au moins ladite vanne (6) afin que le moyen de piégeage (4) puisse piéger lesdits oxydes d'azote notamment lorsque le ou les catalyseurs de conversion (3) présentent un taux de conversion inférieur à ladite valeur prédéterminée (Cₘᵢₙ) et de telle sorte que ledit moyen de piégeage puisse déstocker lesdits oxydes d'azote simultanément à une conversion.

2. Ensemble selon la revendication 1, **caractérisé en ce qu'**il comprend en outre un moyen de chauffage (7) associé à au moins un moyen de piégeage des NO_{X} (4).

3. Ensemble selon la revendication 1, **caractérisé en ce qu'**il comprend en outre au moins un premier capteur de température (8) disposé en amont des catalyseurs (3), ledit premier capteur (8) étant relié audit moyen de contrôle (9) auquel il transmet des valeurs de température.

4. Ensemble selon la revendication 3, **caractérisé en ce qu'**il comprend en outre au moins un deuxième capteur de température (10) disposé en amont du moyen de piégeage des oxydes d'azote (4), ledit capteur (10) étant relié audit moyen de contrôle (9) auquel il envoie des valeurs de température.

5. Ensemble selon l'une quelconque des revendications 1 à 4, **caractérisé en ce que** ledit calculateur (9) est en outre relié audit moyen de chauffage (7) afin de l'actionner en fonction notamment des valeurs de température qu'il reçoit et/ou de l'état de saturation du piège à NOₓ.

6. Ensemble selon l'une quelconque des revendications 1 à 5, **caractérisé en ce que** ledit calculateur (9) réagit en fonction des températures qu'il reçoit et en fonction de valeurs prédéterminées mémorisées, et actionne en conséquence la vanne de répartition du débit (6).

7. Ensemble selon l'une quelconque des revendications 1 à 6, **caractérisé en ce qu'**il comprend en outre un moyen (11) destiné à injecter des hydrocarbures dans la ligne d'échappement (2), en amont des catalyseurs de conversion (3), commandé par ledit calculateur (9).

8. Procédé d'élimination des oxydes d'azote présents dans les gaz d'échappement issus d'un moteur à combustion interne diesel ou à allumage commandé fonctionnant en mélange pauvre, ledit procédé consistant à :
- convertir les oxydes d'azote sur au moins deux plages de température de conversion (T1, T2; T3, T4) non jointives, pour lesquelles la conversion est supérieure à un certain taux de conversion (Cₘᵢₙ), grâce à plusieurs catalyseurs de conversion (3),
- adsorber lesdits oxydes d'azote sur au moins un moyen de piégeage spécifique (4) avec une température d'adsorption inférieure à la température minimale de la première plage de température de conversion (T1, T2),
**caractérisé en ce que** l'adsorption des oxydes d'azote est réalisée pour au moins une plage de température des gaz d'échappement dans laquelle le taux de conversion catalytique est inférieur à ladite valeur prédéterminée (Cₘᵢₙ), et **en ce que** la désorption des oxydes d'azote peut être realisée simultanément à la conversion desdits oxydes d'azote.

9. Procédé d'élimination selon la revendication 8, **caractérisé en ce qu'**il consiste à adsorber lesdits oxydes d'azote sur le moyen de piégeage dans une plage de température d'adsorption (T4, Tst2) supérieure à la température maximale de conversion de la dernière plage de température de conversion (T3, T4).

10. Procédé selon la revendication 8 ou 9, **caractérisé en ce que** l'on désorbe les oxydes d'azote adsorbés en les chauffant et/ou en faisant passer les gaz d'échappement à travers ledit moyen de piégeage spécifique (4).

11. Procédé selon l'une quelconque des revendications 8 à 10, **caractérisé en ce que** l'on désorbe les NOₓ adsorbés en les chauffant par un moyen spécifique de chauffage associé audit moyen (4) de piégeage des oxydes d'azote.

12. Procédé selon l'une quelconque des revendications 8 à 11, **caractérisé en ce que** l'adsorption/désorption est réalisée dans un conduit (5) en dérivation de la ligne d'échappement principale (2) et **en ce que** l'on module le débit des gaz d'échappement entre le conduit de dérivation (5) et la ligne principale (2) en fonction d'au moins un paramètre lié à la température des gaz dans la ligne d'échappement et/ou à l'état de saturation du piège à NOₓ.

13. Procédé selon la revendication 12, **caractérisé en ce que** l'on mesure la température des gaz en au moins un point (8 ; 10) de la ligne d'échappement.

14. Procédé selon la revendication 13, **caractérisé en ce que** l'on mesure la température avant la conversion catalytique.

15. Procédé selon l'une quelconque des revendications 12 à 14, **caractérisé en ce que** l'on mesure la température en amont de l'adsorption des oxydes d'azote.

16. Procédé selon l'une quelconque des revendications 9 à 15, **caractérisé en ce que** l'on utilise un calculateur (9) qui reçoit des températures mesurées en au moins un point de la ligne d'échappement.

17. Procédé selon la revendication 16, **caractérisé en ce que** ledit calculateur (9) reçoit des températures mesurées en amont de la conversion catalytique et en amont de l'adsorption des oxydes d'azote et **en ce que** ledit calculateur (9) commande en conséquence un élément (6) de modulation du flux entre la ligne d'échappement principale (2) et le conduit de dérivation (5).

18. Procédé selon la revendication 16 ou 17, **caractérisé en ce que** ledit calculateur (9) commande le moyen (7) de chauffage des gaz d'échappement associé au moyen (4) de piégeage des oxydes d'azote.

19. Procédé selon l'une quelconque des revendications 9 à 18, **caractérisé en ce que** l'on injecte en outre des hydrocarbures lorsque le ratio HC/NOₓ contenu dans les gaz d'échappement en amont de la conversion catalytique (3) n'est pas compris dans une plage déterminée.

## Patentansprüche

1. Anordnung zur Entfernung von Stickoxiden (NOₓ), die in Auspuffgasen aus einem Dieselmotor oder Motor mit gesteuerter Zündung, der mit Magergemisch arbeitet, vorliegen, wobei die Anordnung Teil der Auspuffleitung ist, die den Motor verlässt und umfassend:
- eine Mehrzahl von Katalysatoren (3) zur Umwandlung der Stickoxide, angeordnet in der Hauptauspuffleitung (2) wobei die Katalysatoren nicht verbundene Temperaturumwandlungsbereiche (T1, T2; T3, T4) aufweisen, für die die Umwandlung der NOₓ bei einem bestimmten Umwandlungsgrad (Cₘᵢₙ) liegt,
- wenigstens ein Mittel (4), das vor den Umwandlungskatalysatoren (3) angeordnet ist und vorgesehen ist, um die Stickoxide einzufangen und dann zu befreien,
- wenigstens eine Leitung (5), die als Umleitung der Hauptauspuffleitung (2) angeordnet ist, in welcher wenigstens eines der Einfangmittel der NOₓ (4) angeordnet ist,
- wenigstens ein Ventil (6), das zum Modulieren des Gasdurchsatzes zwischen der Umleitungsleitung (5) und der Hauptauspuffleitung (2) vorgesehen ist,
**dadurch gekennzeichnet, dass** sie im Übrigen umfasst
- ein Mittel wie einen Rechner (9), vorgesehen, um wenigstens das Ventil (6) zu regeln, damit das Einfangmittel (4) die Stickoxide einfangen kann, vor allem wenn der oder die Umwandlungskatalysatoren (3) einen Umwandlungsgrad unter dem vorbestimmten Wert (Cₘᵢₙ) aufweisen und derart, dass das Einfangmittel die Stickoxide simultan zu einer Umwandlung abladen kann.

2. Anordnung nach Anspruch 1, **dadurch gekennzeichnet, dass** sie im Übrigen ein Heizmittel (7) verbunden mit wenigstens einem Einfangmittel der NOₓ (4) umfasst.

3. Anordnung gemäß Anspruch 1, **dadurch gekennzeichnet, dass** sie im Übrigen wenigstens einen ersten Temperatursensor (8) umfasst, der vor den Katalysatoren (3) angeordnet ist, wobei der erste Sensor (8) mit dem Mittel zur Regelung (9) verbunden ist, an das er die Temperaturwerte übermittelt.

4. Anordnung nach Anspruch 3, **dadurch gekennzeichnet, dass** sie im Übrigen wenigstens einen zweiten Temperatursensor (10) umfasst, der vor dem Mittel zum Einfangen der Stickoxide (4) angeordnet ist, wobei der Sensor (10) mit dem Mittel zum Regeln (9) verbunden ist, welchem er Temperaturwerte sendet.

5. Anordnung nach einem der Ansprüche 1 bis 4, **dadurch gekennzeichnet, dass** der Rechner (9) im Übrigen mit dem Heizmittel (7) verbunden ist, um es in Abhängigkeit von vor allem Temperaturwerten, die er empfängt, oder vom Sättigungszustand des Einfangens für NOₓ in Betrieb zu setzen.

6. Anordnung nach einem der Ansprüche 1 bis 5, **dadurch gekennzeichnet, dass** der Rechner (9) in Abhängigkeit der Temperaturen reagiert, die er empfängt und in Abhängigkeit von vorbestimmten gespeicherten Werten und folglich das Verteilerventil des Durchsatzes (6) in Betrieb setzt.

7. Anordnung nach einem der Ansprüche 1 bis 6, **dadurch gekennzeichnet, dass** sie im Übrigen ein Mittel (11) umfasst, das vorgesehen ist, um Kohlenwasserstoffe in die Auspuffleitung (2) vor den Umwandlungskatalysatoren (3), gesteuert durch den Rechner (9) einzuspritzen.

8. Verfahren zur Entfernung von Stickoxiden, die in den Auspuffgasen aus einem Dieselverbrennungsmotor oder Verbrennungsmotor mit gesteuerter Selbstzündung, der mit Magergemisch arbeitet vorliegen, wobei das Verfahren darin besteht:
- die Stickoxide in wenigstens zwei Umwandlungstemperaturbereichen (T1, T2; T3, T4), die nicht verbunden sind, für welche die Umwandlung oberhalb eines gewissen Umwandlungsgrades (Cₘᵢₙ) dank mehrerer Umwandlungskatalysatoren (3) liegt, umzuwandeln,
- die Stickoxide auf wenigstens einem spezifischen Einfangmittel (4) mit einer Adsorptionstemperatur unter der Minimaltemperatur des ersten Umwandlungstemperaturbereichs (T1, T2) zu adsorbieren,
**dadurch gekennzeichnet, dass** die Adsorption der Stickoxide für wenigstens einen Temperaturbereich der Auspuffgase durchgeführt wird, in welchem der katalytische Umwandlungsgrad unterhalb des vorbestimmten Wertes (Cₘᵢₙ) liegt und dadurch, dass die Desorption der Stickoxide simultan zur Umwandlung dieser Stickoxide durchgeführt werden kann.

9. Verfahren zur Entfernung nach Anspruch 8, **dadurch gekennzeichnet, dass** es darin besteht, die Stickoxide auf dem Einfangmittel in einem Adsorptionstemperaturbereich (T4, Tst2) oberhalb der Maximalumwandlungstemperatur des letzten Temperaturumwandlungsbereichs (T3, T4) zu adsorbieren.

10. Verfahren nach Anspruch 8 oder 9, **dadurch gekennzeichnet, dass** man die adsorbierten Stickoxide dersorbiert, indem man sie erhitzt und/oder indem man die Auspuffgase über das spezifische Einfangmittel (4) passieren lässt.

11. Verfahren nach einem der Ansprüche 8 bis 10, **dadurch gekennzeichnet, dass** man die adsorbierten NOₓ desorbiert, indem man sie durch ein spezifisches Heizmittel erwärmt, das dem Mittel (4) zum Einfangen der Stickoxide zugeordnet ist.

12. Verfahren nach einem der Ansprüche 8 bis 11, **dadurch gekennzeichnet, dass** die Adsorption/Desorption in einer Leitung (5) als Umleitung der Hauptauspuffleitung (2) durchgeführt wird und dadurch, dass man den Durchsatz der Auspuffgase zwischen der Umleitungsleitung (5) und der Hauptleitung (2) in Abhängigkeit von wenigstens einem Parameter moduliert, der mit der Temperatur der Gase in der Auspuffleitung und/oder dem Sättigungszustand der Falle an NOₓ verbunden ist.

13. Verfahren nach Anspruch 12, **dadurch gekennzeichnet, dass** man die Temperatur der Gase an wenigstens einem Punkt (8; 10) der Auspuffleitung misst.

14. Verfahren nach Anspruch 13, **dadurch gekennzeichnet, dass** man die Temperatur vor der katalytischen Umwandlung misst.

15. Verfahren nach einem der Ansprüche 12 bis 14, **dadurch gekennzeichnet, dass** man die Temperatur vor der Adsorption der Stickoxide misst.

16. Verfahren nach einem der Ansprüche 9 bis 15, **dadurch gekennzeichnet, dass** man einen Rechner (9) verwendet, der Temperaturen empfängt, die an wenigstens einem Punkt der Auspuffleitung gemessen sind.

17. Verfahren nach Anspruch 16, **dadurch gekennzeichnet, dass** der Rechner (9) Temperaturen empfängt, die vor der katalytischen Umwandlung um vor der Adsorption der Stickoxide gemessen sind, und dadurch, dass der Rechner (9) folglich ein Element (6) zur Modulation des Stromes zwischen der Hauptauspuffleitung (2) und Umleitungsleitung (5) steuert.

18. Verfahren nach Anspruch 16 oder 17, **dadurch gekennzeichnet, dass** der Rechner (9) das Mittel (7) zum Heizen der Auspuffgase steuert, das dem Mittel (4) zum Einfangen der Stickoxide zugeordnet ist.

19. Verfahren nach einem der Ansprüche 9 bis 18, **dadurch gekennzeichnet, dass** man im Übrigen Kohlenwasserstoffe einspritzt, wenn das Verhältnis HC/NOₓ, das in den Auspuffgasen enthalten ist, vor der katalytischen Umwandlung (3) nicht in einem vorbestimmten Bereich liegt.

## Claims

1. Assembly for removing oxides of nitrogen (NOₓ) present in the exhaust gases produced by a diesel engine or spark-ignition engine operating on a lean mixture, the said assembly forming part of the exhaust line leaving the engine and including:
- several catalysers (3) for converting oxides of nitrogen, arranged in the main exhaust line (2), said catalysers having non-contiguous conversion temperature ranges (T1, T2; T3, T4) for which the conversion of NOₓ is greater than a certain rate of conversion (Cₘᵢₙ);
- at least one means (4), placed upstream from the conversion catalysers and designed to trap then release oxides of nitrogen;
- at least one line (5) placed as a shunt relative to the main exhaust line (2) within which is placed at least one means (4) of trapping the NOₓ;
- at least one valve (6) designed to modulate the flow of gas between the said shunt line (5) and the main exhaust line (2);
***characterised in that*** it also includes
- a means such as a computer (9) designed to control at least the said valve (6) so that the means of trapping (4) can trap the said oxides of nitrogen in particular when the conversion catalyser(s) (3) present a rate of conversion below the said predetermined value (Cₘᵢₙ) and such that the said means of trapping can release the said oxides of nitrogen simultaneously with a conversion.

2. Assembly according to Claim 1, ***characterised in that*** it also includes a means of heating (7) associated with at least one means of trapping the NOₓ (4).

3. Assembly according to Claim 1, ***characterised in that*** it also includes at least a first temperature sensor (8) arranged upstream of the catalysers (3), the said first sensor (8) being connected to the said means of control (9) to which it sends temperature values.

4. Assembly according to Claim 3, ***characterised in that*** it also includes at least a second temperature sensor (10), arranged upstream of the catalysers (3), the said sensor (10) being connected to the said means of control (9) to which it sends temperature values.

5. Assembly according to any of Claims 1 to 4, ***characterised in that*** the said computer (9) is also connected to the said means of heating (7) in order to be able to activate it in particular according to the temperature values which it receives and/or the state of saturation of the NOₓ trap.

6. Assembly according to any of Claims 1 to 5, ***characterised in that*** the said computer (9) reacts according to the temperatures that it receives and depending on predetermined memorised values activates the flow distribution valve (6).

7. Assembly according to any of Claims 1 to 6, ***characterised in that*** it also includes a means (11) of injecting hydrocarbons in the exhaust line (2) upstream of the conversion catalysers (3), controlled by the said computer (9).

8. Method for removing oxides of nitrogen (NOₓ) present in the exhaust gases produced by a diesel engine or spark-ignition engine operating on a weak mixture, the said method consisting of:
- converting the oxides of nitrogen over at least two non-contiguous conversion temperature ranges (T1, T2; T3, T4) for which the conversion of NOₓ is greater than a certain rate of conversion (Cₘᵢₙ), by means of several catalytic converters (3);
- adsorbing the said oxides of nitrogen on at least one special means of trapping (4) with an adsorption temperature lower than the minimum temperature of the first conversion temperature range (T1, T2)
***characterised in that*** the adsorption of oxides of nitrogen is performed for at least one exhaust gas temperature range in which the rate of catalytic conversion is lower than the said predetermined value (Cₘᵢₙ) and **in that** the desorption of oxides of nitrogen can be performed simultaneously with the conversion of the said oxides of nitrogen.

9. Method of removal according to Claim 8, ***characterised in that*** it consists of adsorbing the said oxides of nitrogen on the means of trapping in an adsorption temperature range (T4, Tst2) higher than the maximum temperature of conversion of the last conversion temperature range (T3, T4).

10. Method according to Claim 8 or Claim 9, ***characterised in that*** the adsorbed oxides of nitrogen are desorbed by heating them and/or by passing the exhaust gases through the said special means of trapping (4).

11. Method according to any of Claims 8 to 10, ***characterised in that*** the adsorbed oxides of nitrogen are desorbed by heating them by means of a specific means of heating associated with the said means (4) of trapping the oxides of nitrogen.

12. Method according to any of Claims 8 to 11, ***characterised in that*** adsorption/desorption are performed in a pipe (5) which shunts the main exhaust line (2) and that the flow of exhaust gas between the shunt pipe (5) and the main line (2) is modulated according to at least one parameter linked to the temperature of the gases in the exhaust line and/or to the state of saturation of the NOₓ trap.

13. Method according to Claim 12, ***characterised in that*** the temperature of the gases is measured at at least one point (8, 10) in the exhaust line.

14. Method according to Claim 13, ***characterised in that*** the temperature is measured before catalytic conversion.

15. Method according to any of claims 12 to 14, ***characterised in that*** the temperature is measured upstream of the adsorption of oxides of nitrogen.

16. Method according to any of Claims 9 to 15, ***characterised in that*** a computer (9) is used which receives the temperatures measured at at least one point in the exhaust line.

17. Method according to Claim 16, ***characterised in that*** the said computer (9) receives temperatures measured upstream of catalytic conversion and upstream of the adsorption of oxides of nitrogen and **in that** the said computer controls in consequence an element (6) modulating the flow between the main exhaust line (2) and the shunt pipe (5).

18. Method according to Claim 16 or Claim 17, ***characterised in that*** the said computer (9) controls the means (7) of heating the exhaust gases associated with the means (4) of trapping the oxides of nitrogen.

19. Method according to any of Claims 9 to 18, ***characterised in that*** one also injects hydrocarbons when the ratio HC/NOₓ contained in the exhaust gases upstream of catalytic conversion (3) is not within a predetermined range.
